# EUROPEAN PATENT APPLICATION

(11) **EP 1 166 986 A2**
(43) Date of publication of application: **02.01.2002**
(21) Application number: 01114718.8
(22) Date of filing: 21.06.2001
(51) Int. Cl.: B29C 31/00, B29C 33/36, B29C 67/20, A42B 3/00, B29C 51/12, B29C 51/20

(54) **High-productivity apparatus and method for molding composite items**

(30) Priority: 29.06.2000 IT MI001465
(71) Applicant: Alessio S.r.l., 24127 Bergamo (IT)
(72) Inventor: Alessio, Gianni Franco, 24030 Presezzo (Prov. of Bergamo) (IT)
(74) Representative: Modiano, Guido, Dr.-Ing.

(57) **Abstract**

A method for molding composite items, constituted by beads of sintered expanded resin and by inserts, comprising the steps of: using a movable half-mold (2) and first and second half-molds (3,4) which can perform a translational motion at right angles to the direction of motion of the movable half-mold (2); performing the molding operation by means of one of the translatable half-molds (3,4) mated with the movable half-mold (2), translating the translatable half-mold (3,4) from a position for accessing the half-mold to a molding position, simultaneously accessing the other one of the translatable half-molds (3,4) when the other one of the translatable half-molds (3,4) is located at the region for access to the translatable half-mold.

## Description

The present invention relates to a high-productivity apparatus and method for molding composite items.

It is known that in recent years expanded resins in the form of sinterable beads (particularly polystyrene and polypropylene) have become particularly important in many industrial fields for the manufacture of composite articles, such as for example protective helmets for sports and leisure, food containers, insulating elements and the like.

These and other composite elements are substantially constituted by a portion made of a sintered expanded resin and by inserts constituted by the same resin in phases other than the expanded one: for example injection-molded rigid inserts or thermoformed films.

The inserts can also be constituted by materials whose chemical nature is different from that of the expanded resin: the anchoring of these elements to the expanded-resin portion occurs, in this case, by partial immersion of the inserts in said resin or by applying appropriate primers which, upon adding heat and mechanical pressure, tend to make the inserts adhere to the resin.

The molding of composite items constituted by elements made of beads of expanded resin and by inserts traditionally occurs by means of ordinary machines for molding these resins or in machines in which one of the two half-molds can perform a translational motion at right angles to the closure direction of the half-molds.

Both types of apparatus have automatic systems for handling the inserts.

From the functional point of view, ordinary molding apparatuses are substantially composed of two half-molds, one whereof is movable and the other one is fixed, in order to allow to close and open the half-molds; automation is used to place the inserts in one of the two half-molds.

The half-molds are substantially constituted by a hollow structure or shell composed of a contoured wall which determines the shape of the parts and of walls which have only a structural function. The contoured wall has a plurality of holes which allow the passage of vapor and air between the inside of the shell and the molding chamber formed by mating the two half molds.

Other known apparatuses are those having a movable half-mold, which has the same functions that it has in the above cited apparatuses, and another half-mold which can perform a translational motion at right angles to the movement of the movable half-mold: the only substantial difference with respect to usual apparatuses is the fact that the handling system has a larger movement area by acting on the translatable half-mold when it is in the axially offset position with respect to the movable half-mold.

The methods commonly used for molding are substantially of two types.

A first method places the inserts, by means of automatic manipulators, in one of the two half-molds of an apparatus for molding expanded resin, then performs the molding cycle and finally performs a step of unloading the finished parts from the apparatus.

The molding step is essentially composed of the following sub-steps: injection of the expanded resin beads in the molding chamber formed by the mating of the two half-molds and by the presence of the inserts; sintering of the beads and simultaneous bonding thereof to the inserts by adding steam; cooling, by adding nebulized water on the internal side of the two half-molds.

The second type of method entails: execution of the step of sintering the expanded resin portion; assembly of the inserts, by means of the automatic manipulators, with the sintered expanded resin portion; step of bonding one another the inserts and the sintered expanded resin portion; and step of unloading the finished parts from the apparatus.

The bonding step of this second type of method comprises substantially the following sub-steps: addition of steam (which provides the heat required for bonding); and cooling by applying nebulized water on the inner side of the half-molds.

In both methods, the inserts are placed by automation and in any case not simultaneously with the molding step.

Therefore, one of the greatest drawbacks of the prior art is low productivity, due to the fact that the operations for placing the inserts and for unloading the finished parts are not simultaneous with the molding operation; the steps of insert placement, molding and unloading of the finished parts are in fact performed sequentially, with no possibility of overlap. Each step can begin only after the end of the preceding step.

This leads to very long cycle times, especially in view of the fact that insert placement and finished part unloading operations have significant durations.

Another drawback of known methods and apparatus is that they allow to place the inserts only by automation. This makes it practically impossible to apply inserts which have complex shapes and/or are difficult to handle, for example for low-rigidity inserts.

Automatic manipulators are unable to manipulate these kinds of insert.

The aim of the present invention is to provide a method for molding composite items in which the insert placement step can occur simultaneously with the molding step.

Within this aim, an object of the present invention is to provide a method for molding composite items which allows a much higher productivity than known types of method.

Another object of the present invention is to provide a method for molding composite items which allows to mold even parts having a shape which is very complex and/or difficult to handle automatically.

Another object of the present invention is to provide a method for molding composite items which allows, thanks to the characteristics of the apparatus, manual intervention between cycles or even during a same molding cycle.

Another object of the present invention is to provide an apparatus for molding composite materials which allows to implement the molding method with high productivity.

Another object of the present invention is to provide a method and an apparatus for molding composite items which are highly reliable, relatively simple to manufacture, and at competitive costs.

This aim and these and other objects which will become better apparent hereinafter are achieved by a method for molding composite items, constituted by beads of sintered expanded resin and by inserts, by using a movable half-mold and first and second half-molds which can perform a translational motion at right angles to the direction of motion of said movable half-mold, characterized in that it comprises the steps consisting of:
performing the molding operation by means of one of said translatable half-molds mated with said movable half-mold, translating said translatable half-mold from a position for accessing said half-mold to a molding position, simultaneously accessing the other one of said translatable half-molds when the other one of said translatable half-molds is located at the region for access to said translatable half-mold.

Further characteristics and advantages of the invention will become better apparent from the description of preferred but not exclusive embodiments of the method and the apparatus according to the present invention, illustrated only by way of non-limitative example in the accompanying drawings, wherein:

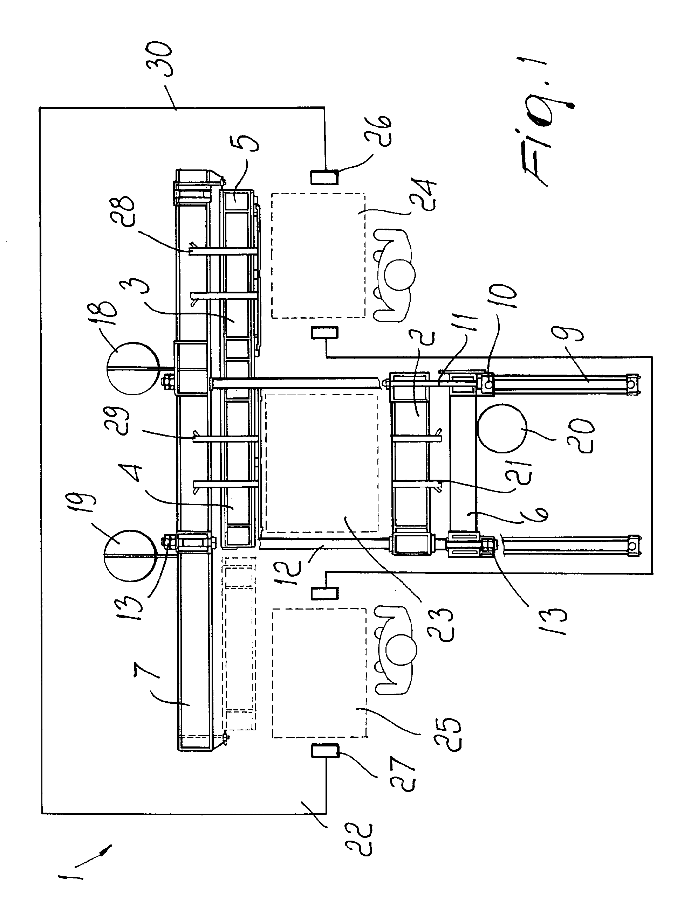

Figure 1 is a plan view of the apparatus according to the present invention;

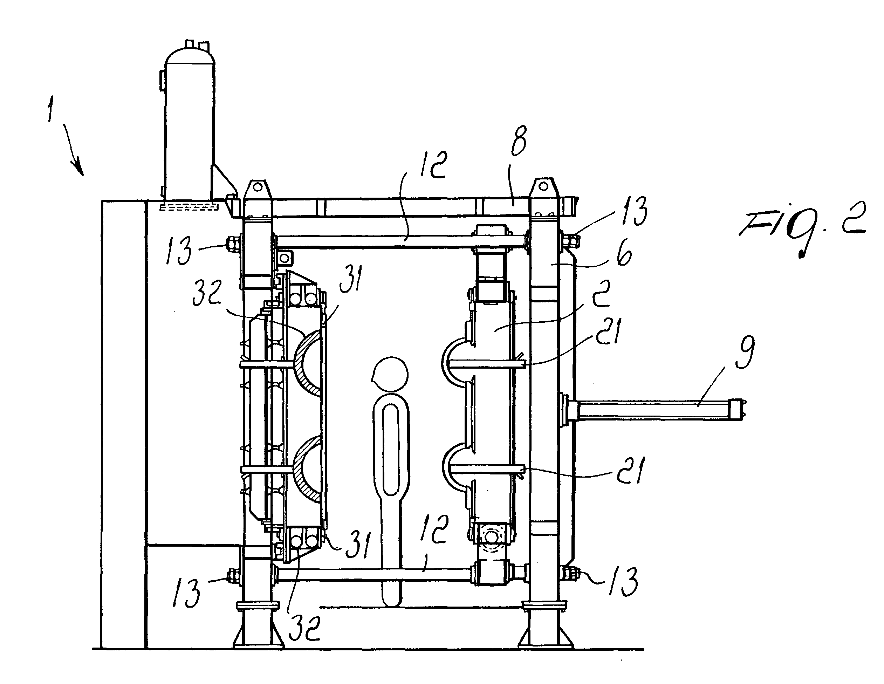

Figure 2 is a side elevation view of the apparatus according to the present invention;

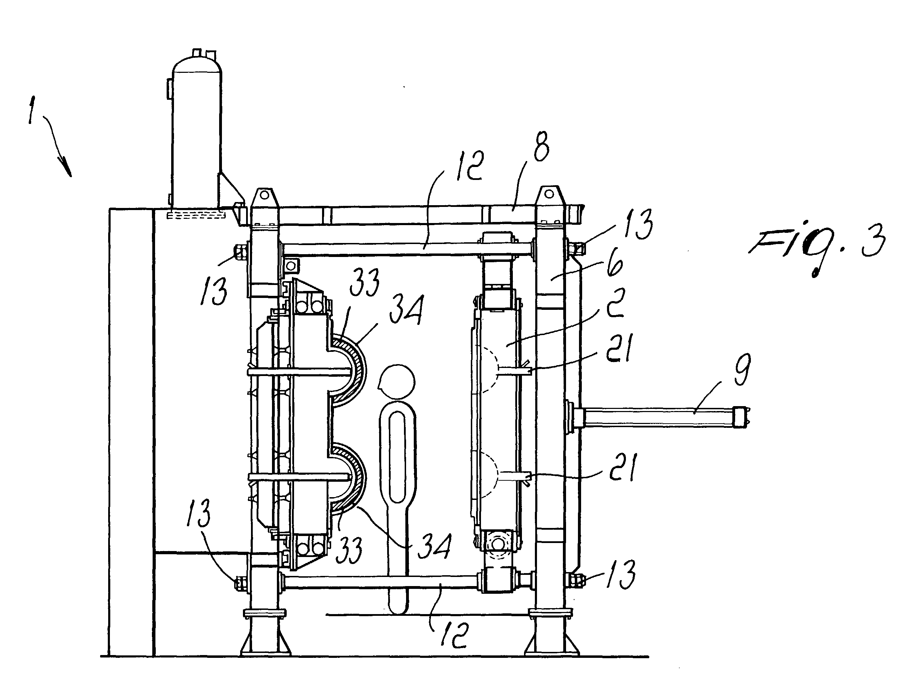

Figure 3 is a side elevation view of a second embodiment of the apparatus according to the present invention;

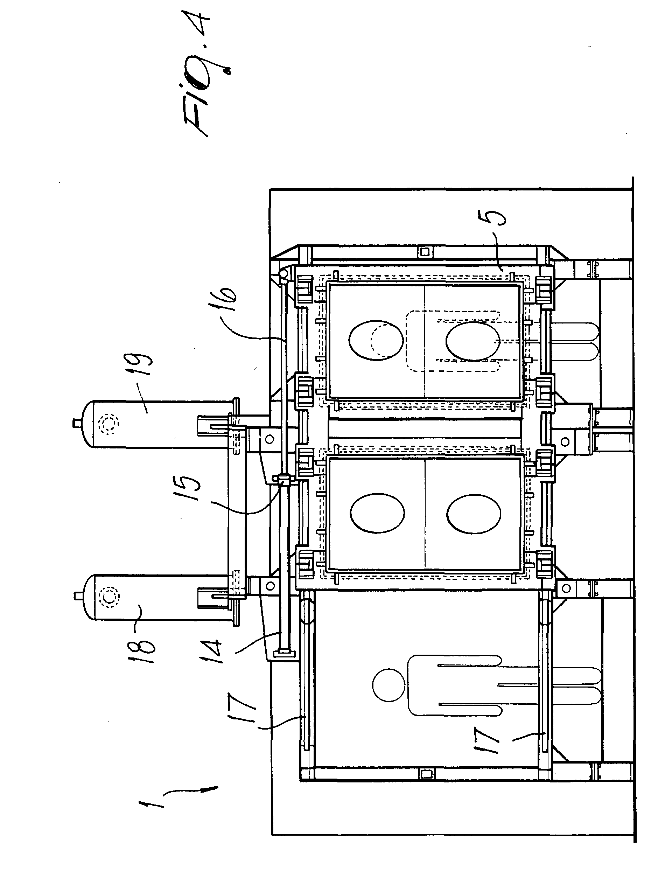

Figure 4 is a front elevation view of the apparatus according to the present invention;
Figures 5a-5g illustrate the steps of the method according to a first embodiment of the present invention; and
Figures 6a-6l illustrate the steps of the method according to a second embodiment of the present invention.

With reference to the figures, the apparatus according to the present invention, generally designated by the reference numeral 1, has a molding area or stage 23 and two manual access areas or stages 24 and 25 which are arranged laterally of the molding area 23.

Moreover, there is a protection area 22, delimited by a perimeter of barriers 30, whose only violations by operators while the apparatus is active are allowed at the manual access areas 24 and 25.

The presence of operators in these areas is reported by appropriate sensors 26 and 27. The control and management system of the apparatus does not enable the movements of the apparatus when the operators are in the manual access areas 24 and 25.

Structurally, the apparatus 1 is substantially composed of two uprights 6 and 7, by a cross beam 8 and by columns 12 which are fixed to the uprights 6 and 7 by screw means 13.

The apparatus 1 further comprises a movable half-mold 2 and two half-molds 3 and 4 which move jointly with each other because they are rigidly coupled to a single movable platform 5. The two movements occur at right angles to each other.

The half-mold 2 comprises actuation means constituted by cylinders 9 which are rigidly coupled to the upright 6, pistons 10, and stems 11 rigidly coupled to the half-mold 2. The half-mold 2 slides on guiding columns 12.

In a further embodiment, the actuation means can be of the electromechanical type, i.e., a system composed of an electric motor, an optional reduction unit and an articulated crank mechanism, or a mixed-type system, composed of a fluid-actuated subsystem and an articulated crank mechanism.

The half-mold 2 moves between a closure (or active) position, in which it is mated with one of the two translatable half-molds 3 and 4, and an open (or inactive) position, in which the half-mold 2 has moved away at right angles to the direction of motion of the translatable half-molds 3 and 4 so as to allow their disengagement and therefore their movement.

The platform 5 is provided with actuation means which comprise a cylinder 14, rigidly coupled to the upright 7, a piston 15, and a stem 16, rigidly coupled to the platform 5. The platform 5 slides on guiding columns 17 being rigidly coupled to the upright 7.

In a further embodiment, the actuation means of the platform 5 can be of the electromechanical type, i.e., a system composed of an electric motor, an optional reduction unit, and a toothed pinion, which are rigidly coupled to the platform 5 and a rack rigidly coupled to the upright 7.

The platform 5 and the half-molds 3 and 4 rigidly coupled thereto move between a position in which the half-mold 3 is in the molding area 23 and the half-mold 4 is in the manual access area 25, and a position in which the half-mold 4 lies in the molding area 23 while the half-mold 3 is in the manual access area 24.

In view of the functions and operation of the half-molds, in this description the half-mold 2 is assumed to be the movable one and the half-molds 3 and 4 are assumed to be the translatable ones.

The apparatus according to the invention has three systems for feeding beads of expanded resin. The composite items to be manufactured with the apparatus according to the invention are made of sintered beads of expanded resin, designated by the reference numerals 31 and 33, and by inserts 32 and 34. The inserts 32 and 34 can be made of the same resin that constitutes the expanded beads 31 and 33 in different phases of the expanded material: for example, rigid injection-molded inserts or thermoformed films.

The inserts 32 and 34 can also be constituted by materials whose chemical nature differs from that of the expanded resin 31 and 33. Anchoring of these elements to the expanded resin portion 31 and 33 occurs therefore by partially immersing the inserts in the resin or by applying appropriate primers which, upon adding heat and mechanical pressure, tend to make the inserts adhere to the resin.

Finally, the inserts 32 and 34 can be constituted by sintered expanded resin beads, of the same chemical nature (same polymers or copolymers having the same base) as the expanded resin base elements 31 and 33 but with different physical and mechanical properties.

The expanded resin beads 31, 33 are fed by means of a hopper 21 with an injector 21 for the movable half-mold, a hopper 18 with an injector 28 for the translatable half-mold 3, and a hopper 19 with an injector 29 for the translatable half-mold 4.

As an alternative, the apparatus according to the invention can have systems for feeding the expanded resin beads 31, 33 only for the movable half-mold 2 or only for the translatable half-molds 3 and 4.

The apparatus further comprises a pump for generating vacuum (not shown) and is provided with couplings for the passage of services required to perform the molding steps: steam service, compressed air service, cooling water service (all of which are not shown).

The apparatus allows to carry out two different methods.

A first method performs the cycle with a single molding step: the step of sintering the expanded resin beads 31 and 33 and the step of joining them (by bonding or immersion) with the inserts 32 are simultaneous.

The following situation occurs when the apparatus is started.

The movable half-mold 2 is in the open position and one of the two translatable half-molds 3 and 4 is in one of the two manual access positions 24 or 25. For example, it is assumed that the translatable half-mold 3 is in the manual access position 24 and therefore the translatable half-mold 4 is in the molding position 23.

At this point, the operator manually places the inserts 32 in the translatable half-mold 3. The inserts 32 are fixed by means of interlocks and/or the generation of negative pressure in the shell of the half-mold 3. Then the operator leaves the protection area of the apparatus 22.

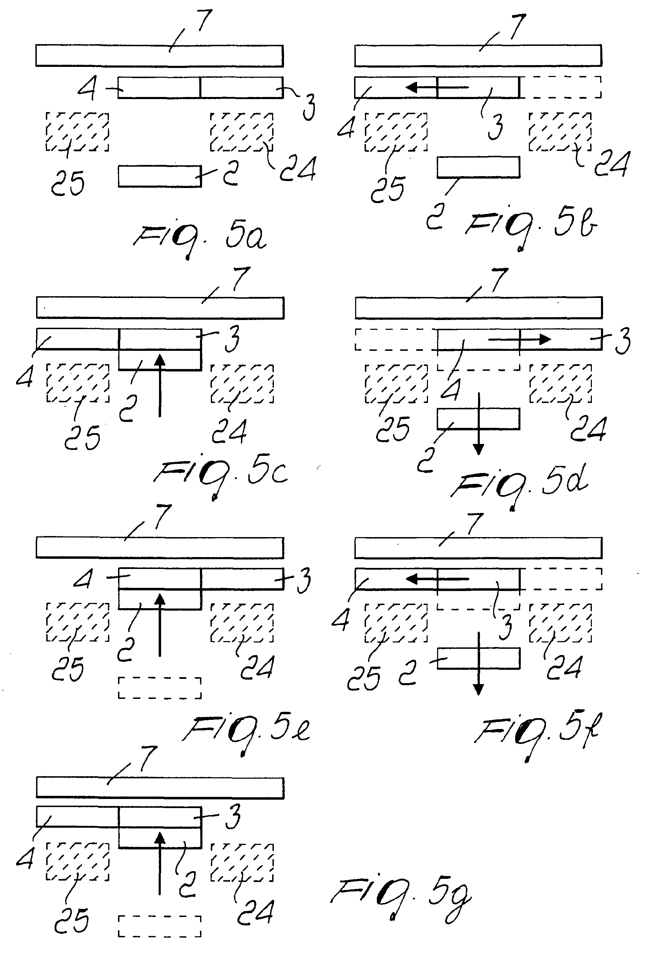

This step is shown in Figure 5a.

The management and control system of the apparatus receives from the protection sensors 26 the signal that the operator has left the protection area of the apparatus 22 and thus gives the clearance for the translational motion of the translatable platform 5. The translatable platform 5 and the half-molds 3 and 4 rigidly coupled thereto perform a translational motion until the half-mold 3 is in the molding position 23 and the half-mold 4 is in the manual access position 25.

This step is shown in Figure 5b.

At this point, Figure 5c, the movable half-mold 2 is moved into the closure position by means of the cylinders 9, the pistons 10, and the piston rods 11. The half-mold 2 slides on the guiding columns 12. The molding step then begins and consists of the following sub-steps: injection, by means of the injectors 21 and the hopper 20, of the expanded resin beads 31 into the molding chamber formed by the mating of the half-molds 2 and 3 and by the presence of the inserts 32; sintering of the beads 31 and simultaneous bonding thereof to the inserts 32 by adding steam; cooling, by adding nebulized water on the inner side of the half-molds 2 and 3.

Simultaneously with the molding step, performed between the movable half-mold 2 and the translatable half-mold 3, in the manual access position 25 the operator manually places the inserts 32 in the translatable half-mold 4, in a manner fully similar to what has been done in the manual access position 24.

At the end of the molding step, and in any case after the management and control system of the apparatus has received from the protection sensors 27 the signal that the operator has left the protection area of the apparatus 22, the movable half-mold 2 moves into the open position, Figure 5d, and the manufactured article is extracted onto the translatable half-mold 3. The translatable platform 5 and the half-molds 3 and 4 rigidly coupled thereto perform a translational motion until the half-mold 4 is in the molding position 23 and the half-mold 3 is in the manual access position 24.

The movable half-mold 2 is moved into the position for closure with the translatable half-mold 4, Figure 5d, and the molding step (sintering of the expanded resin beads 31 and their simultaneous bonding to the inserts 32 by adding steam) begins.

Simultaneously with the molding step performed between the movable half-mold 2 and the translatable half-mold 4, in the manual access position 24, the operator unloads, manually and/or with the aid of mechanical extractors, the finished part from the translatable half-mold 3: then he manually places the inserts 32 in the same translatable half-mold.

This step is shown in Figure 5d.

At the end of the molding step, and in any case after the management and control system of the apparatus has received from the protection sensors 26 the signal that the operator has left the protection area 22 of the machine, the movable half-mold 2 moves into the open position, Figure 5e, the manufactured article is extracted onto the translatable half-mold 4, and the translatable platform 5 and the half-molds 3 and 4 that are rigidly coupled thereto perform a translational motion until the half-mold 3 is in the molding position 23 and the half-mold 4 is in the manual access position 25.

At this point, Figure 5f, the movable half-mold 2 is moved into the position for closure with the translatable half-mold 3, and the molding step (sintering of the expanded resin beads 31 and simultaneous bonding thereof to the inserts 32 by adding steam) begins.

Simultaneously with the molding step performed between the movable half-mold 2 and the translatable half-mold 3, in the manual access position 25 the operator unloads, manually and/or with the aid of mechanical extractors, the finished part from the translatable half-mold 4 and then places manually the inserts 32 on the same translatable half-mold.

From this point onwards, the cycle is in the steady state and continues with the steps in which alternately one of the two translatable half-molds is engaged with the movable half-mold 2 in the molding step, while the other translatable half-mold is in position in the respective manual access area (area 24 for the half-mold 3, are 25 for the half-mold 4) and can be accessed for manual and/or mechanical unloading of the finished parts and for the manual placement of the inserts 32.

The second method that can be implemented with the apparatus according to the invention performs the cycle with a double molding step: the step of sintering the expanded resin beads 33 and the step of bonding them to the inserts 34 are separate.

In this case, the following situation occurs when the apparatus is started.

The movable half-mold 2 is in the open position.

One of the two translatable half-molds 3, 4 is in one of the two manual access positions 24 or 25. For example, it is assumed that the half-mold 3 is in the manual access position 24. Accordingly, the translatable half-mold 4 is in the molding position 23.

The movable half-mold 2 is moved into the closure position by means of the cylinders 9, the pistons 10 and the piston rods 11. The half-mold 2 slides on the guiding columns 12.

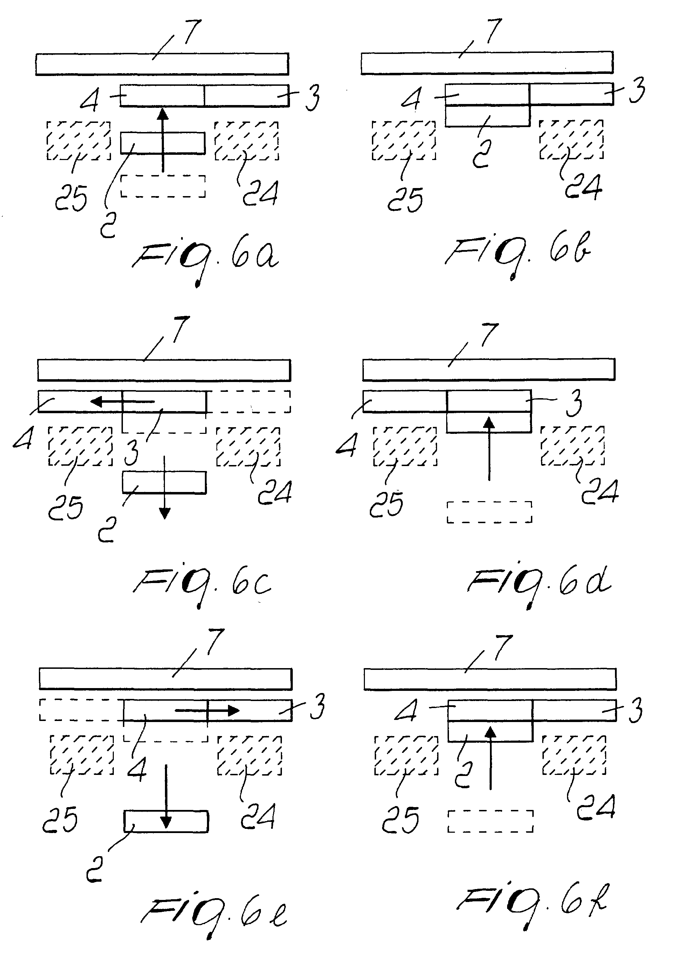

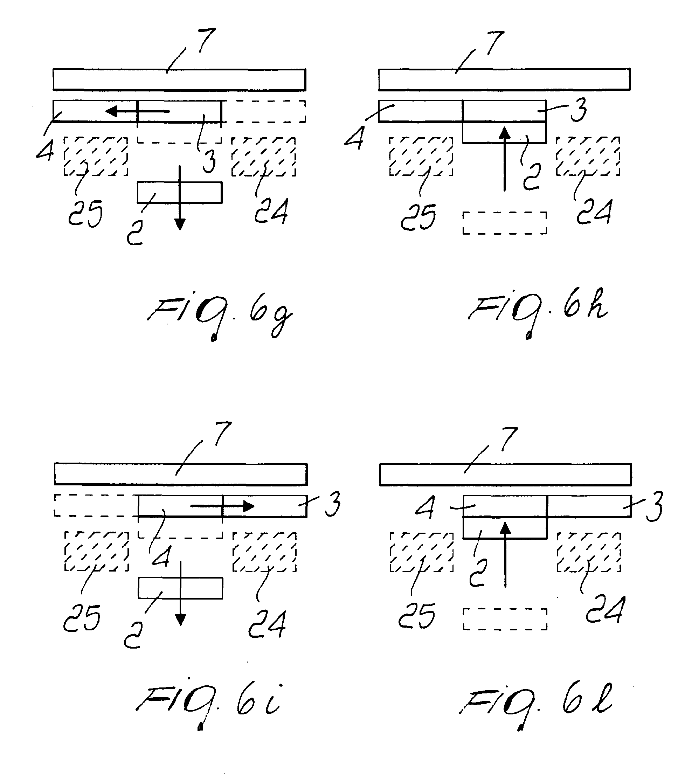

This step is shown in Figure 6a.

At this point, the step of sintering the expanded resin 33 begins and consists of the following sub-steps: injection, by means of the injectors 29 and the hopper 19, of the expanded resin beads into the molding chamber formed by the mating of the half-molds 2 and 4; sintering of the beads by adding steam; cooling, by adding nebulized water on the internal side of the half-molds.

At the end of the sintering step, Figure 6b, the movable half-mold 2 moves into the open position, Figure 6c, the sintered expanded resin element 33 is extracted onto the translatable half-mold 4, and the translatable platform 5 and the half-molds 3 and 4 that are rigidly coupled thereto perform a translational motion until the half-mold 4 is in the manual access position 25 and the half-mold 3 is in the molding position 23.

At this point, Figure 6d, the movable half-mold is moved into the position for closure with the translatable half-mold 3 and the step of sintering the expanded resin 33 begins (the resin beads are injected by means of the injectors 28 and the hopper 18).

Simultaneously with this sintering step, in the manual access position 25, the operator manually assembles the inserts 34 with the sintered expanded resin element 32 on the translatable half-mold 4.

At the end of the sintering step, and in any case after the management and control system of the apparatus has received from the protection sensors 27 the signal that the operator has left the protection area 22 of the apparatus, the movable half-mold 2 moves into the open position (the sintered expanded resin element 33 is extracted onto the translatable half-mold 3), and the translatable platform 5 and the half-molds 3 and 4 which are rigidly coupled thereto perform a translational motion until the half-mold 4 is the molding position 23 and the half-mold 3 is in the manual access position 24.

This condition is shown in Figure 6e.

The movable half-mold 2 is then moved into the position for closure with the translatable half-mold 4, Figure 6f, and the step for bonding the inserts 34 with the sintered expanded resin elements 33 begins. This step is composed of the following sub-steps: addition of steam (which provides the heat required for bonding); cooling, by adding nebulized water on the inner side of the half-molds.

Simultaneously with this bonding step, in the manual access position 24, the operator manually assembles the inserts 34 with the sintered expanded resin element 33 on the translatable half-mold 3.

At the end of the bonding step, and in any case after the management and control system of the apparatus has received from the protection sensors 26 the signal that the operator has left the protection area 22, the movable half-mold 2 moves into the open position, Figure 6g, the finished part is extracted onto the translatable half-mold 4, and the translatable platform 5 and the half-molds 3 and 4 rigidly coupled thereto perform a translational motion until the half-mold 3 is in the molding position 23 and the half-mold 4 is in the manual access position 25.

At this point, Figure 6h, the movable half-mold 2 is moved into the position for closure with the translatable half-mold 3 and the step of bonding the inserts 34 with the sintered expanded resin elements 33 begins. Simultaneously with this bonding step, in the manual access position 25, the operator unloads, manually and/or with the aid of mechanical extractors, the finished part from the translatable half-mold 4.

At the end of the bonding step, and in any case after the management and control system of the apparatus has received from the protection sensors 27 the signal that the operator has left the protection area 22 of the apparatus, the movable half-mold 2 moves into the open position, Figure 6i, the manufactured article is extracted onto the translatable half-mold 3, and the translatable platform 5 and the half-molds 3 and 4 rigidly coupled thereto perform a translational motion until the half-mold 4 reaches the molding position 23 and the half-mold 3 reaches the manual access position 24.

At this point, Figure 6l, the movable half-mold 2 is moved into the position for closure with the translatable half-mold 4 and the step of sintering the expanded resin 33 begins. Simultaneously with this sintering step, in the manual access position 24, the operator unloads, manually and/or with the aid of mechanical extractors, the finished part from the translatable half-mold 3.

From this point onward, the cycle is in the steady state and continues with the steps in which alternatively one of the two translatable half-molds is engaged, with the movable half-mold 2, in the step of sintering the expanded resin 33 or in the step of mutually bonding said resin and the inserts 34. The other translatable half-mold is in position in the respective manual access area (region 24 for the half-mold 3, region 25 for the half-mold 4) and can be accessed for the manual and/or mechanical unloading of the finished parts and for the manual placement of the inserts 34 (assembly with the sintered expanded resin elements 33).

In practice it has been observed that the method and the apparatus according to the invention fully achieve the intended aim and objects, since they ensure a much higher productivity than known methods and apparatus. The application of the inserts and the unloading of the finished parts are performed simultaneously with the molding steps.

Moreover, the particularity of the apparatus of allowing manual intervention between each cycle or even during each cycle allows to produce composite items even with inserts which have a very complex shape and/or are difficult to handle and would be impossible to produce with known types of apparatus which use mechanical manipulators.

The method and the apparatus thus conceived are susceptible of numerous modifications and variations, all of which are within the scope of the inventive concept; all the details may further be replaced with other technically equivalent elements.

In practice, the materials used, so long as they are compatible with the specific use, as well as the dimensions, may be any according to requirements and to the state of the art.

The disclosures in Italian Patent Application No. MI2000A001465 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for molding composite items, constituted by beads of sintered expanded resin and by inserts, by using a movable half-mold and first and second half-molds which can perform a translational motion at right angles to the direction of motion of said movable half-mold, **characterized in that** it comprises the steps that consist in:
performing the molding operation by means of one of said translatable half-molds mated with said movable half-mold, translating said translatable half-mold from a position for accessing said half-mold to a molding position, simultaneously accessing the other one of said translatable half-molds when the other one of said translatable half-molds is located at the region for access to said translatable half-mold.

2. The method according to claim 1, **characterized in that** it comprises the steps that consist in:
manually placing said inserts in a first one of said translatable half-molds;
producing the translational motion of said first translatable half-mold from said position for access to said first translatable half-mold to said molding position;
moving said movable half-mold so that it closes against said first translatable half-mold in order to perform the molding step;
manually placing said inserts in said second translatable half-mold;
opening said movable half-mold and producing the translational motion of said first translatable half-mold to a second position for access to said half-mold, simultaneously placing said second half-mold at said molding position;
closing said movable half-mold against said second translatable half-mold and starting the molding step;
unloading said first translatable half-mold simultaneously with the molding step performed between said movable half-mold and said second translatable half-mold; and
loading with said inserts said first translatable half-mold and repeating the cycle.

3. The method according to claim 2, **characterized in that** said step of unloading said translatable half-molds is performed manually and/or with the aid of mechanical extractors.

4. The method according to claim 2, **characterized in that** said translatable half-molds are respectively supplied by hoppers and injectors.

5. The method according to claim 2, **characterized in that** said inserts are made of plastic material which has a chemical affinity with said sintered expanded resin beads.

6. The method according to claim 2, **characterized in that** said inserts are made of any material, **characterized in that** it comprises, distributed on the side designed to make contact with said expanded resin beads, a primer which allows to bond it with said expanded resin beads, under the action of heat and mechanical pressure.

7. The method according to claim 2, **characterized in that** said inserts are made of any material and their bonding with said expanded resin beads is provided by partial immersion thereof in said expanded resin beads.

8. The method according to claim 2, **characterized in that** said inserts are made of sintered expanded resin beads which have a chemically affinity with said sintered expanded resin beads.

9. The method according to claim 1, **characterized in that** it comprises the steps that consist in:
starting from a configuration in which a first one of said translatable half-molds is at one of two positions for accessing the half-mold and a second one of said translatable half-molds is at said molding position, closing said movable half-mold against said translatable half-mold;
performing a step of sintering said expanded resin;
opening said movable half-mold and producing the translational motion of said translatable half-mold to the manual access position and of said second translatable half-mold to said molding position;
closing said movable half-mold and performing a sintering step;
simultaneously with said sintering step of said second translatable half-mold, manually assembling said inserts on said first translatable half-mold;
opening said movable half-mold and performing the translational motion of said first half-mold to the molding position and of said second half-mold to the manual access position;
closing said movable half-mold with said first translatable half-mold and bonding said inserts with said sintered expanded resin;
simultaneously with said step of bonding said inserts, assembling said inserts on said second translatable half-mold;
opening said movable half-mold and producing the translational motion of said first translatable half-mold to said manual access position and of said second translatable half-mold to said molding position;
closing said movable half-mold against said second translatable half-mold and beginning the step of bonding said inserts;
simultaneously with said bonding step performed in said second translatable half-mold, unloading the finished part from said first translatable half-mold;
opening said movable half-mold and producing the translational motion of said first movable half-mold, once unloaded, to said molding position and of said second translatable half-mold to said manual access position;
repeating the cycle.

10. The method according to claim 9, **characterized in that** said inserts are made of a plastic material which has chemical affinity with said expanded resin beads.

11. The method according to claim 9, **characterized in that** said inserts are made of any material and comprise a primer which is distributed on the side meant to make contact with said expanded resin and allows them to bond with said expanded resin.

12. The method according to claim 9, **characterized in that** said inserts are constituted by sintered expanded beads which have chemical affinity with said expanded resin beads.

13. An apparatus for molding composite items, constituted by sintered expanded resin beads and by rigid or flexible inserts, **characterized in that** it comprises:
a movable half-mold (2);
a first translatable half-mold (3) and a second translatable half-mold (4);
said movable half-mold (2) being movable between a position for closure with one of said translatable half-molds (3,4) and an open position, said translatable half-molds (3,4) being able to perform a translational motion at right angles to the movement of said movable half-mold (2), so that alternatively one of said translatable half-molds (3,4) is in a molding position and is suitable to be mated with said movable half-mold (2) in order to perform said molding, and the other translatable half-mold (3,4) is in a manual access position (24,25), for access on the part of a human operator, simultaneously with the molding steps performed with the translatable half-mold (3,4) that mates with the movable half-mold.

14. The apparatus according to claim 13, **characterized in that** it comprises a translatable platform (5) which is suitable to rigidly support said two translatable half-molds (3,4).

15. The apparatus according to claim 13, **characterized in that** it comprises, for each one of said two translatable half-molds (3,4), a hopper (19) and injectors (29) for feeding said resin beads (31,33).

16. The apparatus according to claim 13, **characterized in that** it comprises, for each one of said translatable half-molds (3,4) and for said movable half-mold (2), a hopper (19) and injectors (29) for feeding said resin beads (31,33).

17. The apparatus according to claim 13, **characterized in that** it comprises a protection area (22) delimited by barriers (30) which are interrupted at said manual access positions (24,25) in order to allow operators to access said protection area (22).

18. The apparatus according to claim 13, **characterized in that** it comprises sensors (26,27) suitable to detect the presence of said operators at said manual access positions (24,25).

19. A helmet, particularly for cycling and skiing, **characterized in that** it is manufactured by means of a method as claimed in claims 1 to 11.

20. The use of an apparatus according to claims 13 to 18, **characterized in that** said composite item is a helmet for cycling and skiing.

21. The method according to claim 1, **characterized in that** said expanded resin beads are chosen among expanded polystyrene, expanded polypropylene, expanded polyethylene, or a copolymer whose base is said polystyrene, polypropylene and polyethylene.
